# EUROPÄISCHE PATENTSCHRIFT

(11) **EP 0 857 660 B1**
(45) Veröffentlichungstag und Bekanntmachung des Hinweises auf die Patenterteilung: **06.02.2002**
(21) Anmeldenummer: 97811031.0
(22) Anmeldetag: 30.12.1997
(51) Int. Cl.: B65D 41/04, B29C 70/80, B29C 43/36

(54) **Verfahren und Vorrichtung zur Herstellung einer Verschlusskapsel**
Method and apparatus for the manufacture of a closure cap
Méthode et dispositif pour la fabrication d'une capsule de fermeture

(30) Priorität: 07.02.1997 CH 27697
(43) Veröffentlichungstag der Anmeldung: 12.08.1998
(73) Patentinhaber: Oberburg Engineering AG, 3414 Oberburg (CH)
(72) Erfinder: Lüdi, Thomas, 3415 Hasle-Rüegsau (CH)
(74) Vertreter: Roshardt, Werner Alfred, Dipl.-Phys.

(56) Entgegenhaltungen:
- EP-A- 0 207 385
- EP-A- 0 499 108
- DE-A- 4 217 254
- FR-A- 2 130 290
- PATENT ABSTRACTS OF JAPAN vol. 007, no. 261 (M-257), 19.November 1983 & JP 58 142806 A (NIHON KURAUNKORUKU KK), 25.August 1983,

## Beschreibung

Die Erfindung betrifft ein Verfahren gemäss dem Oberbegriff des Anspruchs 1 und eine Vorrichtung gemäss dem Oberbegriff des Anspruchs 4 zur Herstellung einer Verschlusskapsel. Diese Verschlusskapsel ist insbesondere für Glas- oder Kunststoffflaschen geeignet.

### Stand der Technik

Getränkeflaschen aus Glas oder Kunststoff werden mit einer Metallkapsel (z. B. aus Aluminium) bzw. einer Kunststoffkapsel verschlossen. Auf dem Boden der Kapsel ist eine Dichtung aus Kunststoff angebracht. Diese stellt die Dichtigkeit des Verschlusses sicher. Die Haltbarkeit des Flascheninhalts hängt folglich von der Qualität und der Lebensdauer der Dichtung ab. Es versteht sich, dass die primären Kriterien für die Auswahl des Dichtungsmaterials Geschmacksneutralität und Gesundheitsverträglichkeit sein müssen. Dies bringt es mit sich, dass die Merkmale der Verarbeitbarkeit nicht nach Belieben festgelegt werden können, sondern oft als gegeben hingenommen werden müssen.

Beim Anbringen des Verschlusses auf der Getränkeflasche erfährt die Dichtungseinlage der Verschlusskapsel eine starke mechanische Belastung. Entstehen Risse im Material, dann muss die Verschlusskapsel wieder entfernt werden. Die Qualität der Dichtung ist also von zentraler Bedeutung.

Seit einiger Zeit besteht nun auch das Bestreben, auf die Verwendung von PVC-haltigen Kunststoffen zu verzichten. Die Prozesse zur Verarbeitung von PVC-Kunststoffdichtungen sind aber häufig nicht ohne weiteres auf PVC-freie Kunststoffe umzustellen, da sich die PVC-freien Kunststoffe z. T. ziemlich anders verhalten (z. B. hinsichtlich Fliessfähigkeit). Entsprechend gibt es auch so unterschiedliche Herstellungsverfahren wie z. B. das Schleuder- und das Prägeverfahren.

Eine Vorrichtung zum Anbringen einer Dichtung im Inneren eines Flaschenverschlusses durch Prägen ist z. B. aus der EP 0 499 108 A1 (Japan Crown Cork) bekannt. Der Verschluss (32) wird auf einen vertikal bewegbaren Stössel (206) eines Drehturms gebracht und dort zentriert. Dann wird er nach oben gegen eine in vertikaler Richtung ortsfeste Begrenzungshülse (118) gefahren, welche den äusseren Rand der anzubringenden ringförmigen Dichtung definieren wird. In der Begrenzungshülse (118) ist ein in vertikaler Richtung leicht gefederter Stempel (120) gelagert. Dieser wird das Zentrum der Verschlusskapsel (32) grossflächig abdecken.

Das Dichtungsmaterial (204) wird von oben in einen zwischen Stempel (120) und Begrenzungshülse (118) gebildeten Ringraum eingeführt und durch eine im Ringraum verfahrbare Prägehülse (116) nach unten in die Verschlusskapsel (32) gebracht. Unter dem Druck der Prägehülse (116) verteilt sich das Dichtungsmaterial gleichmässig auf dem Boden der Kapsel. Überschüssiges Material kann sich unter eine anhebbare Überschusskompensationshülse (114) schieben, welche den Ringraum gegen den Stempel (120) hin begrenzt.

Ein im Prinzip ähnliches Prägeverfahren ist z. B. auch aus der EP 0 207 385 A3 bekannt. Allerdings wird bei diesem das Dichtungsmaterial in einer vorangehenden Station in Form eines Tropfens im Zentrum der Kapsel deponiert, so dass nicht eine ring-, sondern eine scheibenförmige Dichtungseinlage entsteht.

Ein weiteres Prägeverfahren ist z.B. aus der JP 58 142806 (Nihon Kuraunkoruku KK) bekannt. Hier wird die Dichtungsmasse bis an den Rand des Bodens gepresst. Der Prägestempel hat eine axial verschiebbare Begrenzungshülse, welche sich aufgrund einer passiven Reaktion des radial nach aussen quellenden Dichtungsmaterials zurückzieht, wenn die Dichtungsmasse im Zentrum der Kapsel vorverteilt ist.

Ein Schleuderverfahren ist in der FR 2 130 290 (Metal Closures Limited) offenbart. Hergestellt wird die Dichtung aus einem fliessfähigen Material, welches mit Hilfe der Zentrifugalwirkung einer Rotation verteilt wird.

Die bekannten Verschlüsse vermögen nach wie vor nicht vollständig zu befriedigen.

### Darstellung der Erfindung

Aufgabe der Erfindung ist daher, ein Verfahren und eine Vorrichtung zur Herstellung eines Verschlusses anzugeben, der besser und beständiger als die bekennten ist.

Beim Anbringen des Verschlusses auf der Flasche wird der Übergangsbereich zwischen Boden und Mantel verformt (d. h. er wird an die Kontur der Flaschenöffnung angeformt). Indem nun bei der Erfindung die Dichtung sich bis in den Übergangsbereich erstreckt, kann sie verhältnismässig dünn ausgebildet sein. Beim Verformen des Übergangsbereiches kann die Dichtung somit problemlos folgen, ohne die Gefahr von Rissbildung.

Im Gegensatz dazu ist bei den bekannten Dichtungen ein Wulst vorgesehen, welcher beim Anbringen des Verschlusses stark verformt (insbesondere gequetscht) wird, was zu den oben beschriebenen Problemen (Rissbildung, Bruchgefahr etc.) führen kann.

Dadurch dass die Dichtung ganzflächig an der Kapselinnenseite klebt, besteht im übrigen auch nicht die Gefahr, dass Teile aus der Dichtung ausbrechen und in das Füllgut fallen können.

Gemäss einer bevorzugten Ausführungsform überzieht das Dichtungsmaterial schichtartig den ganzen Boden. In der Mitte kann die Dicke der Schicht sehr klein sein (z. B. 3/10 mm), da in diesem Bereich keine Dichtungsfunktion realisiert werden muss. Je geringer die Dicke, desto mehr Material kann eingespart werden. In einem ringförmigen Randbereich und im Übergangsbereich (d. h. dort wo der gasdichte Abschluss erstellt werden muss) ist die Schichtdicke grösser (z. B. etwa doppelt so gross) angesetzt (z. B. 5/10 - 7/10 mm).

Der Mantel der Verschlusskapsel kann über ein Gewinde verfügen, entsprechend demjenigen am Flaschenhals (die Kapsel kann also auf- und zugeschraubt werden). Nur nebenbei sei bemerkt, dass das Gewinde erst zuletzt angebracht wird, nämlich dann wenn der Verschluss auf den Flaschenhals aufgesetzt wird. Damit der Verschluss mit den Fingern gut erfasst werden kann, kann auch eine Rändelung angebracht sein. Diese ist typischerweise durch eine nach innen ragende, umlaufende Sicke begrenzt. Es ist darauf hinzuweisen, dass sich die Dichtung bei der erfindungsgemässen Verschlusskapsel auch dann bis zum Mantel erstreckt, wenn der durch die genannte Sicke definierte freie Innenquerschnitt der Kapsel kleiner ist als der Durchmesser des Bodens.

Die Verschlusskapsel besteht z. B. aus Aluminium oder einem anderen gut formbaren Metall. Als Dichtungsmaterial wird mit Vorteil ein PVC-freier Kunststoff verwendet. Dies namentlich aus gesundheits- und umwelttechnischen Gründen.

Zur Herstellung der genannten Verschlusskapsel wird gemäss der Erfindung wie folgt vorgegangen:

Zuerst wird eine Portion Dichtungsmaterial auf dem Boden der Kapsel deponiert. Dann wird das Dichtungsmaterial mit einem Prägestempel mit Begrenzungshülse im Rahmen einer Vorprägung flächig auf dem Boden verteilt. Danach wird die Begrenzungshülse kurvengesteuert zurückgezogen (d. h. vom Boden der Kapsel abgehoben), um im Rahmen einer Nachprägung das Dichtungsmaterial zumindest bis an den Mantel zu treiben.

Die Erfindung stellt die Dichtung also mit einem Prägeverfahren her, wobei die Ausformung in zwei Teilschritten erfolgt. Im ersten findet eine gleichmässige Verteilung der (ursprünglich z. B. pfropfenförmigen) Portion statt. Im zweiten wird die Begrenzungshülse gezielt entfernt und das Material bis in den Übergangsbereich (oder sogar geringfügig darüber hinaus) gepresst.

Das Verfahren lässt sich am besten und effizientesten mit einem Drehturm implementieren. Dabei ist es von Vorteil, die Begrenzungshülse zur Durchführung der Nachprägung mechanisch gesteuert anzuheben.

Das Dichtungsmaterial wird an einer Extruderdüse abgeschnitten und möglichst im Zentrum der Kapsel deponiert. Die Portion sollte möglichst flach sein. Da das Material aber zähflüssig ist, kann es nicht gut als dünne Scheibe abgeschnitten werden. Mit Vorteil wird aber darauf geachtet, dass die Länge der wurstförmig extrudierten Portion kleiner als deren Durchmesser ist. Auf diese Weise kann verhindert werden, dass die Portion nach dem Deponieren umkippen kann. Die zentrierte Position stellt nämlich sicher, dass beim nachfolgenden Vorprägen eine gleichmässige Verteilung des Dichtungsmaterials erreicht wird.

Eine Vorrichtung zur Durchführung des Verfahrens verfügt über einen in die Verschlusskapsel einführbaren Prägestempel mit einer diesen umschliessenden Begrenzungshülse sowie ein Trägerelement für die Verschlusskapsel. Gemäss der Erfindung ist die Verschlusskapsel kontrolliert anhebbar, um bei der Nachprägung das Ausprägen der Dichtung bis in den Übergangsbereich zum Mantel am Rand des Bodens zu ermöglichen.

Die Begrenzungshülse wird z. B. durch eine Feder in einer gegenüber der Prägefläche des Prägestempels überstehenden Stellung gehalten und kann durch eine Mechanik kontrolliert zurückgezogen werden. Der Prägestempel kann in vertikaler Richtung ortsfest oder leicht gefedert sein. Die Verschlusskapsel wird dann von unten mit dem Trägerelement (Andrücker) zum Prägestempel gebracht. Das Anheben der Begrenzungshülse wird vorzugsweise durch eine Kurvensteuerung kontrolliert. Bei Drehtürmen lassen sich auf diese Weise grosse Verarbeitungsgeschwindigkeiten bei gleichzeitig hoher Präzision erreichen.

Selbstverständlich sind auch andere Konstruktionen möglich. Die Begrenzungshülse kann z. B. auch elektrisch, magnetisch oder pneumatisch gesteuert bewegt werden. Im übrigen ist nicht ausgeschlossen, dass der Prägestempel verfahrbar ist.

Die Mechanik zum Betätigen der Begrenzungshülse kann einen Hebelmechanismus umfassen, der an aussenseitig der Hülse vorgesehenen Elementen angreift und der von einer auf der Kurvenschiene laufenden Rolle geführt wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a - c: Eine schematische Darstellung des bekannten Verschlusses beim Aufbringen auf eine Flasche;
- Fig. 2a - c: eine schematische Darstellung des erfindungsgemässen Verschlusses beim Aufbringen auf eine Flasche;
- Fig. 3a - f: eine schematische Darstellung des Verfahrens zur Herstellung der erfindungsgemässen Verschlusskapsel;
- Fig. 4: eine schematische Darstellung einer Vorrichtung zum Prägen der erfindungsgemässen Dichtung;
- Fig. 5: eine schematische Darstellung eines Kinematikdiagramms für die Ansteuerung der Vorrichtung gemäss Fig. 4.

Grundsätzlich sind in den Figuren gleiche Teile mit gleichen Bezugszeichen versehen.

### Wege zur Ausführung der Erfindung

Anhand der Figuren 2a - c soll als erstes das Prinzip des erfindungsgemässen Verschlusses erläutert werden.

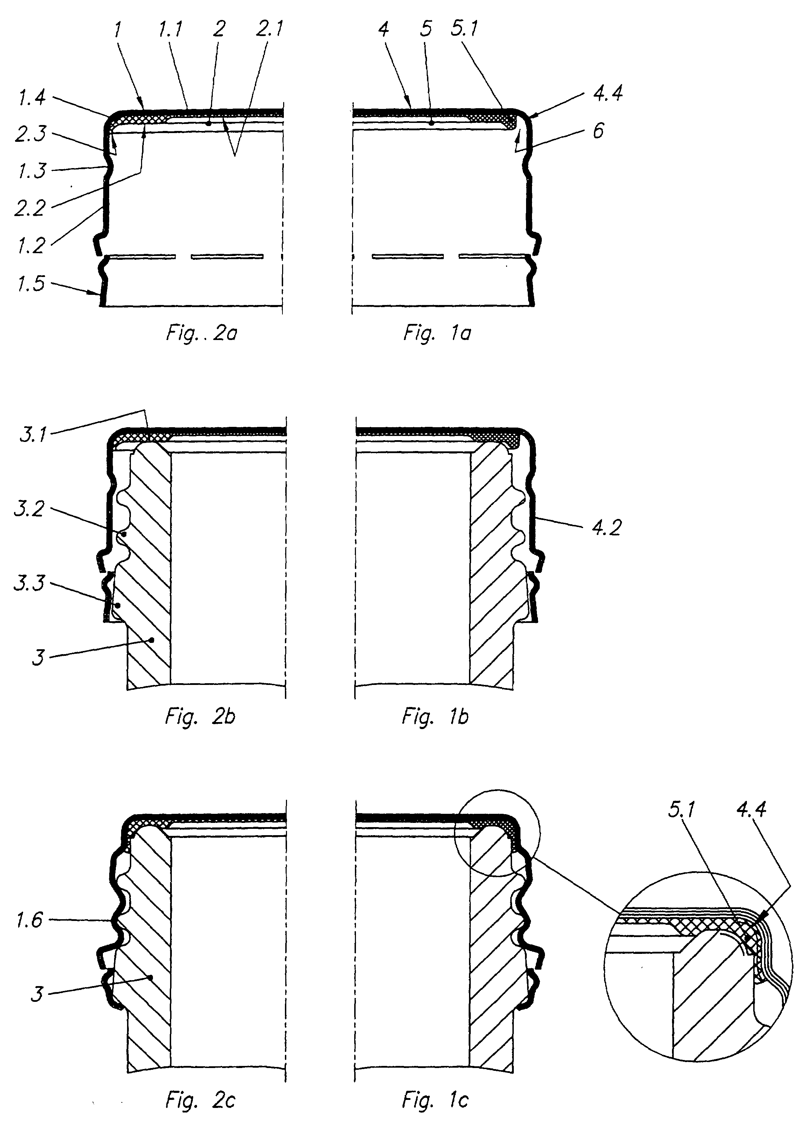

In Fig. 2a ist die Kapsel 1 ausschnittsweise (linke Hälfte eines Querschnitts) dargestellt und zwar so, wie sie aussieht, bevor sie auf den Flaschenhals 3 (vgl. Fig. 2b) aufgesetzt wird. Im vorliegenden Beispiel verfügt sie über einen flachen Boden 1.1 und einen im wesentlichen zylindrischen Mantel 1.2. Der Übergangsbereich 1.4 zwischen Boden 1.1 und Mantel 1.2 ist leicht abgerundet. Im Mantel 1.2 ist eine umlaufende Sicke 1.3 eingeformt. Sie ragt nach innen und verkleinert dadurch den freien Querschnitt. Am (in Fig. 2a - c unteren) Rand des Mantels 1.2 ist in an sich bekannter Weise ein Sicherheitsring 1.5 vorbereitet.

Innenseitig der Kapsel 1 ist auf dem Boden 1.1 eine Dichtungseinlage 2 aus Kunststoff angebracht. Gemäss einer bevorzugten Ausführungsform deckt sie den Boden 1.1 vollständig ab. In einem Zentrumsbereich 2.1 ist sie sehr dünn ausgebildet (z. B. 3/10 mm). In einem ringförmigen Dichtungsbereich 2.2 ist die Dicke etwa doppelt so gross (z. B. 5/10 - 7/10 mm). Gemäss der Erfindung erstreckt sich die Dichtungseinlage 2 bis zum Mantel 1.2. Der Übergangsbereich 1.4 wird somit ebenfalls abgedeckt. Im vorliegenden Beispiel ist sogar der Rand 2.3 der Dichtungseinlage 2 entlang des Mantels 1.2 (in der Darstellung der Fig. 2a: nach unten) gezogen.

Es ist zu beachten, dass die Dichtungseinlage 2 überall dort, wo sie an der Innenseite der Kapsel (sei es am Boden 1.1, am Übergangsbereich 1.4 oder am Mantel 1.2) anliegt, auch mit ihr haftend verbunden ist.

In Fig. 2b ist die Kapsel 1 auf den Flaschenhals 3 aufgesetzt. Der Dichtungsbereich 2.2 liegt auf der Oberkante 3.1 des Flaschenhalses 3. Der Übergangsbereich 1.4 liegt dabei aber noch nicht am Flaschenhals 3 an. In an sich bekannter Weise sind aussenseitig des Flaschenhalses 3 ein Gewinde 3.2 und ein Kragen 3.3 ausgebildet.

In Fig. 2c ist die Flasche im verschlossenen Zustand dargestellt. Der Übergangsbereich 1.4 wurde so abgebogen, dass er sich mit dem Dichtungsbereich 2.2 an den Flaschenhals 3 anschmiegt. Der Sicherheitsring 1.5 ist um den Kragen 3.3 herum geformt, so dass er zum Öffnen des Verschlusses gebrochen werden muss. Schliesslich ist in Fig. 2c auch der Mantel 1.2 an das Gewinde 3.2 des Flaschenhalses 3 angeformt, wodurch die Kapsel 1 zu einem entsprechenden Schraubgewinde 1.6 kommt.

In Fig. 1 a - c ist zum Vergleich ein Verschluss nach dem Stand der Technik dargestellt. Die Kapsel 4 hat im wesentlichen dieselbe Form wie bei der Erfindung. Unterschiedlich ist dagegen die Dichtungseinlage 5. Sie weist nämlich am äusseren Rand einen Wulst 5.1 auf. Zudem endet sie in einem gewissem Abstand zum Mantel 4.2, so dass im Übergangsbereich 4.4 ein Spalt 6 vorhanden ist. Beim Anformen der Kapsel 4 (vgl. Fig. 1c und 1d) wird der Wulst 5.1 zerquetscht. Dies bringt die Gefahr mit sich, dass der Kunststoff Risse bildet und nicht mehr dicht ist.

In Fig. 1c ist der Übergangsbereich 4.4 vergrössert dargestellt. Der Wulst 5.1 mag hier zwar an der Innenseite des Übergangsbereiches 4.4 anliegen, wird aber nicht haften (da er kaltverformt ist). Teile, die vom Rand der Dichtungseinlage abbrechen, können ins-Füllgut fallen. Hierin liegt also ein weiterer wichtiger Unterschied zur Erfindung.

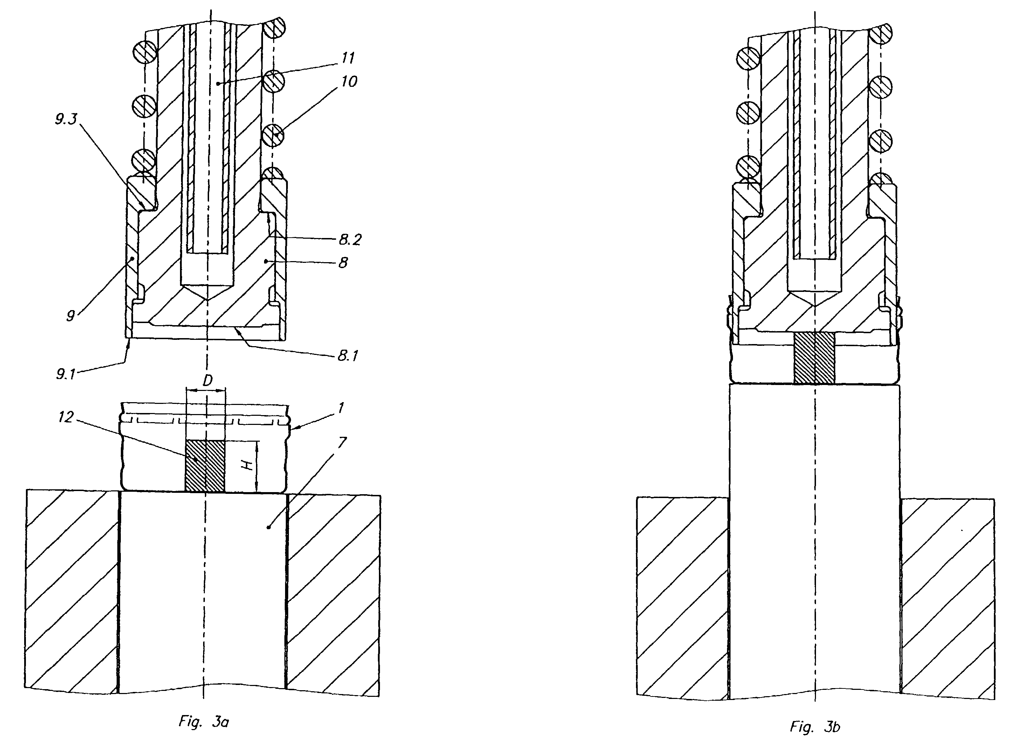

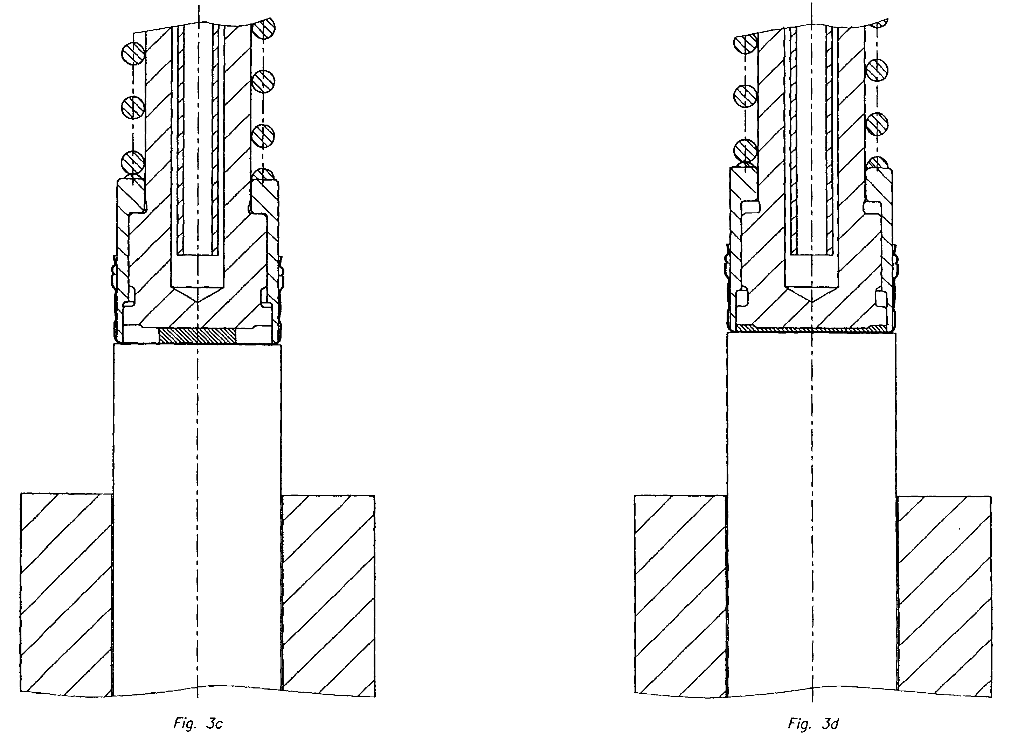

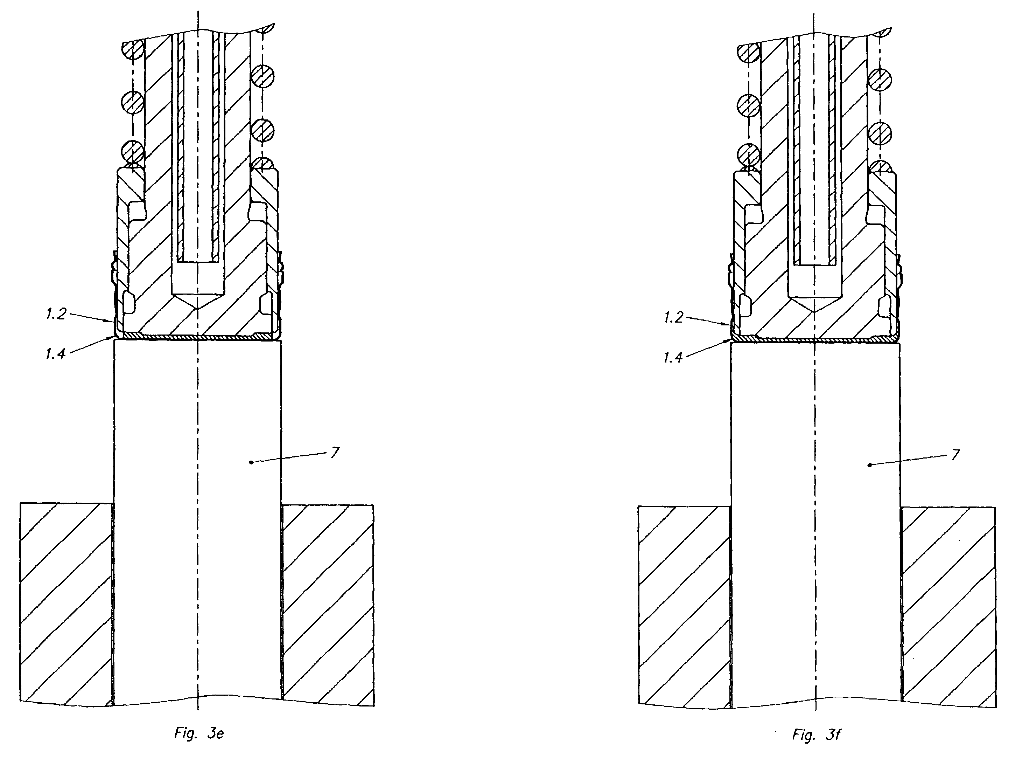

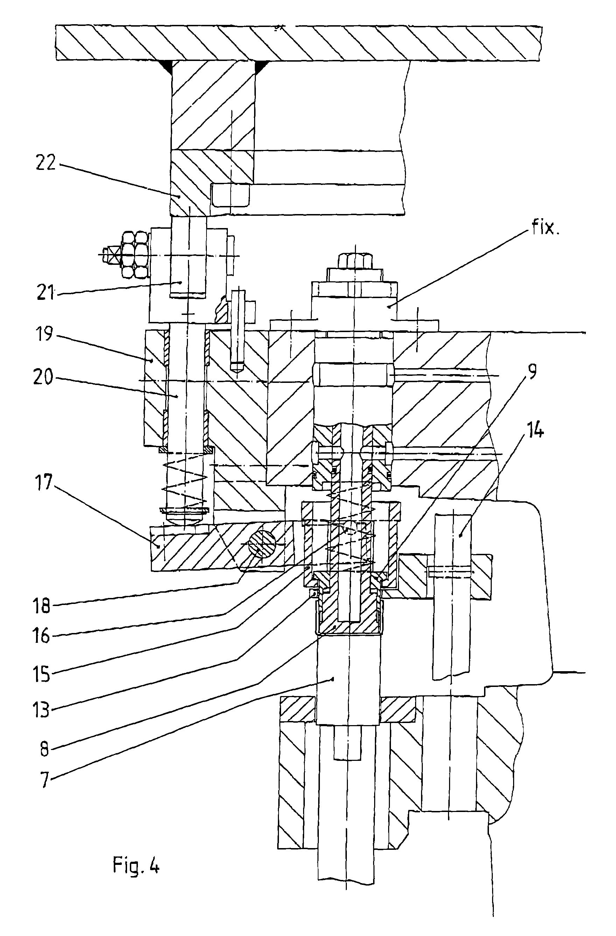

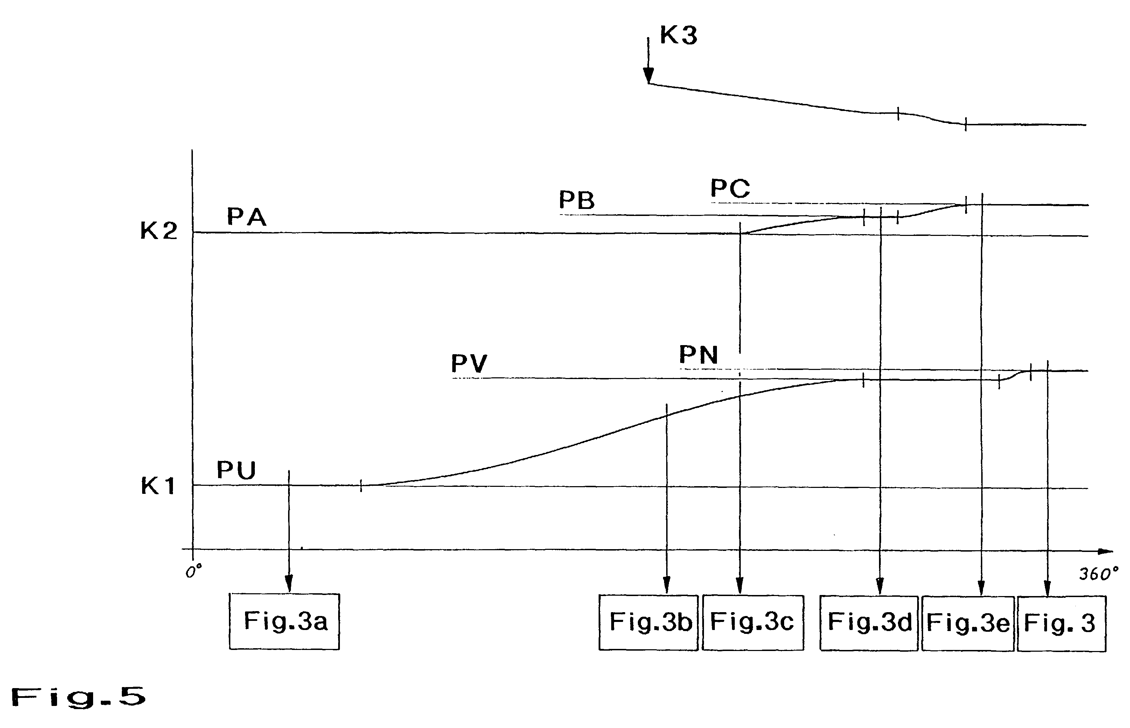

Anhand der Fig. 3a - f soll nun das Verfahren zur Herstellung der erfindungsgemässen Dichtungseinlage 2 erläutert werden.

In Fig. 3a ist die Ausgangsstellung gezeigt. Die Kapsel 1 ruht mit ihrer Öffnung nach oben auf einem Träger 7 (Andrücker). In einem (nicht dargestellten) vorangegangenen Arbeitsschritt ist eine Portion 12 des Dichtungsmaterials im Zentrum der Kapsel 1 deponiert worden. Das Verhältnis von Höhe H zu Querabmessung D (Durchmesser) ist in der Grössenordnung von 1 oder kleiner, damit die Portion 12 nicht umkippen kann.

Auf derselben geometrischen Achse wie der Träger 7 befindet sich ein Prägestempel 8. Er weist an seiner unteren, der Kapsel 1 zugewandten Seite eine Prägefläche 8.1 auf und ist in an sich bekannter Weise mit einem Kanal 11 für eine Kühl- oder Heizflüssigkeit versehen.

Auf der Mantelseite des Prägestempels 8 ist eine Begrenzungshülse 9 koaxial verschiebbar gelagert. Sie hat einen Rand 9.1, welcher in der Ruhestellung gegenüber der Prägefläche 8.1 nach unten vorsteht (um beispielsweise 1 - 2 mm). Dieser Rand 9.1 ist so dünn wie möglich ausgebildet. Eine Feder 10, welche den oberen (bzw. hinteren) Teil des Prägestempels 8 umschliesst, drückt die Begrenzungshülse 9 nach unten, so dass sie - in der Ruhestellung - mit ihrem Anschlag 9.3 auf der Schulter 8.2 an der Aussenseite des Prägestempels 8 aufliegt.

Der Aussendurchmesser der Begrenzungshülse 9 ist so gewählt, dass diese gerade noch in die Kapsel 1 hineingeführt werden kann. Innenseitig ist der Rand 9.1 vorzugsweise "gerade", d. h. ohne Abstufungen oder Abrundungen zylindrisch.

Der Träger 7 wird nun gegen den Prägestempel 8 angehoben (Fig. 3b), wobei die Begrenzungshülse 9, deren Aussendurchmesser nur geringfügig kleiner als der freie Innendurchmesser der Kapsel 1 ist, in die Kapsel 1 eindringt. Die Portion 12 wird nun langsam zerquetscht, wobei sie sich mehr oder weniger gleichmässig auf dem Boden 1.1 zu verteilen beginnt (Fig. 3c). Noch lange bevor das Dichtungsmaterial den Rand der Prägefläche 8.1 erreicht, steht der Rand 9.1 der Begrenzungshülse 9 auf dem Boden 1.1 auf.

Die Bewegung des Trägers 7 geht indessen weiter. Die Begrenzungshülse 9 wird dadurch aus ihrer Ruhestellung hinaus nach oben gegen die Kraft der Feder 10 geschoben (Fig. 3d). Schliesslich kommt der Zeitpunkt, wo das Dichtungsmaterial sich innerhalb der Begrenzungshülse 9 gleichmässig verteilt hat (Fig. 3d). Die Vorprägung ist damit beendet.

Nun folgt die Nachprägung (Fig. 3e und 3f). Die Begrenzungshülse 9 wird dabei zumindest soweit nach oben gezogen, dass der Rand 9.1 hinter der Prägefläche 8.1 verschwindet. Der Übergangsbereich 1.4 wird folglich freigegeben.

Der Träger 7 wird jetzt weiter gegen den Prägestempel 8 gepresst, so dass das Dichtungsmaterial bis zum Mantel 1.2 der Kapsel 1 fliessen kann (Fig. 3f). Je nachdem wie stark nachgepresst wird und wie die äussere Kante des Randes 9.1 geformt ist, klettert das Material mehr oder weniger weit am Mantel entlang nach oben.

Die Dichtungseinlage 2 ist damit fertig. Der Träger 7 wird wieder abgesenkt, so dass die Kapsel 1 entfernt werden kann.

Fig. 4 zeigt beispielhaft eine Vorrichtung zur Durchführung des oben beschriebenen Verfahrens. Und zwar ist ein einzelner Bearbeitungsplatz eines Drehturms im Schnitt dargestellt.

Der bereits erwähnte Träger 7 wird durch ein weiter unten angeordnetes (nicht dargestelltes) Kurvensegment in seiner vertikaler Bewegung gesteuert.

Ebenfalls von unten ist ein Abstreifer 13 über eine Führungsstange 14 bewegbar. Dieser umgreift die Begrenzungshülse 9 an einer Stelle, die bei der Nachprägung gerade oberhalb des oberen Randes der Kapsel 1 liegt. Der Abstreifer 13 bewegt sich am Ende der Nachprägung zusammen mit dem Träger 7 nach unten, um zu verhindern, dass die Kapsel 1 am Prägestempel 8 kleben bleiben kann.

An der Aussenseite der Begrenzungshülse 9 sind radial vorstehende Elemente ausgebildet, an denen ein Mitnehmer 15 angreifen kann, um ein Zurückziehen der Begrenzungshülse 9 im Rahmen der Nachprägung zu ermöglichen. Der Mitnehmer 15 ist in einer Gabelhalterung 16 eines zweiarmigen Hebels 17 gehalten. Der Hebel 17 dreht um eine horizontale Lagerachse 18. Auf das der Gabelhalterung 16 gegenüberliegende Ende des Hebels 17 kann eine Übertragungsstange 20 drücken, welche vertikal verschiebbar im (rotierenden) Drehturmaufbau 19 gelagert ist. Am oberen Ende der Übertragungsstange 20 ist eine Rollenführung 21 angebracht, welche auf einem Kurvensegment 22 abrollt.

Fig. 5 veranschaulicht nochmals die Bewegungen der verschiedenen Teile. Auf der Abszisse ist der Drehwinkel des Drehturms aufgetragen. Die Ordinate gibt die vertikale Bewegung der entsprechenden Teile an. Die Kurve K1 zeigt die Bewegung des Trägers 7 und die Kurve K2 diejenige der Begrenzungshülse 9. Der Zyklus beginnt in der Ausgangsstellung PU bzw. PA (vgl. Fig. 3a). Der Träger 7 wird kontinuierlich angehoben bis zur Stellung PV (Fig. 3b - d). Im letzten Teil dieser Aufwärtsbewegung wird auch die Begrenzungshülse 9 (welche sich bis dahin nicht bewegt hat) nach oben in die Stellung PB angehoben (Fig. 3c - d). Dann beginnt die Nachprägung, bei welcher zunächst die Begrenzungshülse 9 in die Stellung PC nach oben gezogen wird, während der Träger 7 die Stellung PV beibehält (Fig. 3d - e), um danach (bei zurückgezogener Begrenzungshülse 9) den Träger 7 nochmals ein Stück nach oben in die Stellung PN zu pressen.

K3 stellt den Verlauf des Kurvensegments 22 dar, welcher durch den beschriebenen Hebelmechanismus (Rollenführung 21, Übertragungsstange 20, Hebel 17, Lager 18, Gabelhalterung 16, Mitnehmer 15) in die gewünschte Bewegung der Begrenzungshülse umgesetzt wird.

Die Prägekraft kann vor dem Zurückziehen der Begrenzungshülse 9 bei Bedarf etwas reduziert werden. Entsprechend wird dann der Träger 7 aus der Stellung PV (Fig. 3d) etwas abgesenkt, um erst bei der Nachprägung (Fig. 3e - f) bis zur Stellung PN angehoben zu werden.

Es ist klar, dass sich die beschriebenen Ausführungsbeispiele in verschiedenen Aspekten modifizieren lassen. Insbesondere ist hervorzuheben, dass die in Fig. 4 gezeigten konstruktiven Einzelheiten zwar bevorzugt aber nicht unerlässlich sind. Anstelle des Hebelmechanismus kann z. B. eine Stangenführung sinngemäss zu derjenigen des Abstreifers 13 vorgesehen sein (während der Abstreifer ebenso gut von oben angesteuert werden kann).

Der Prägestempel braucht nicht in einer fixen Stellung montiert zu sein. Er kann gewünschtenfalls ohne weiteres vertikal verfahrbar sein, um in die Kapsel abgesenkt zu werden.

Die Begrenzungshülse kann statt mit mechanischen auch mit anderen Mitteln betätigt werden. Als Beispiel sei ein Elektromagnet erwähnt, welcher bei der Nachprägung mit Strom beaufschlagt wird und so die Hülse zurückzieht.

Während beim bevorzugten Verfahren gemäss Fig. 3a - f eine wurstähnliche Portion im Zentrum der Kapsel plaziert wird, sind auch Verfahren möglich, bei denen eine ringförmige Portion entlang des Randes des Bodens eingelegt wird (vgl. diesbezüglich die EP 0 499 108 A1).

Zusammenfassend ist festzustellen, dass durch die Erfindung eine Kapsel geschaffen worden ist, die auch bei der Verwendung von verarbeitungsmässig schwierigeren Materialien als Dichtungseinlage mit hoher Zuverlässigkeit dicht verschliesst.

## Patentansprüche

1. Verfahren zur Herstellung einer Verschlusskapsel, bei welchem
a) eine Portion (12) Dichtungsmaterial auf dem Boden (1.1) der Verschlusskapsel (1) deponiert wird,
b) das Dichtungsmaterial mit einem Prägestempel (8) mit Begrenzungshülse (9) im Rahmen einer Vorprägung flächig verteilt wird,
**dadurch gekennzeichnet, dass**
c) die Begrenzungshülse (9) im Rahmen einer Nachprägung kurvengesteuert zurückgezogen wird, um dann das Dichtungsmaterial bis zum Mantel (1.2) zu treiben.

2. Verfahren nach Anspruch 1, **dadurch gekennzeichnet, dass** die Portion (12) im Zentrum der Verschlusskapsel (1) deponiert wird und eine Höhe (H) hat, die vorzugsweise etwa gleich gross oder kleiner als eine Querabmessung (D) ist.

3. Verfahren nach einem der Ansprüche 1 bis 2, **dadurch gekennzeichnet, dass** eine Steuerung der Höhe und Kante des Randes (2.3) der Dichtungseinlage (2) über eine Nachprägung erfolgt.

4. Vorrichtung zur Durchführung des Verfahrens nach einem der Ansprüche 1 bis 3 mit
a) einem Prägestempel (8),
b) einer den Prägestempel (8) umschliessenden, in die Kapsel (1) einführbaren Begrenzungshülse (9) und
c) einem Trägerelement (7) für die Verschlusskapsel (1),
**dadurch gekennzeichnet, dass**
d) die Begrenzungshülse (9) in einer gegenüber einer Prägefläche (8.1) des Prägestempels (8) vorstehenden Stellung gehalten ist, und dass sie durch eine kurvengesteuerte Mechanik zurückgezogen werden kann, welche kontrolliert anhebbar ist, um das Ausprägen des Dichtungsmaterials bis zum Mantel (1.2) zu ermöglichen.

5. Vorrichtung nach Anspruch 4, **dadurch gekennzeichnet, dass** der Prägestempel (8) auf einem Drehturm unverschiebbar montiert ist, und dass das Trägerelement (7) bei der Vor- und Nachprägung vorzugsweise kurvengesteuert gegen den Prägestempel (8) bewegt wird.

6. Vorrichtung nach einem der Ansprüche 4 bis 5, **dadurch gekennzeichnet, dass** die Mechanik über einen Hebelmechanismus verfügt, der an einem aussenseitig der Begrenzungshülse (9) vorgesehenen Element angreifen kann, um die Begrenzungshülse (9) anzuheben.

7. Vorrichtung nach einem der Ansprüche 4 bis 6, **dadurch gekennzeichnet, dass** die Begrenzungshülse (9) auf einer Mantelseite des Prägestempels (8) koaxial verschiebbar gelagert ist.

8. Vorrichtung nach einem der Ansprüche 4 bis 7, **dadurch gekennzeichnet, dass** eine Feder (10) einen oberen Teil des Prägestempels (8) umschliesst und die Begrenzungshülse (9) nach unten drückt.

9. Vorrichtung nach einem der Ansprüche 4 bis 8, **dadurch gekennzeichnet, dass** die Begrenzungshülse (9) mit einem Anschlag (9.3) auf einer Schulter (8.2) an einer Aussenseite des Prägestempels (8) aufliegt.

10. Vorrichtung nach einem der Ansprüche 4 bis 9, **dadurch gekennzeichnet, dass** ein Abstreifer (13) über eine Führungsstange (14) bewegbar ist.

11. Vorrichtung nach Anspruch 10, **dadurch gekennzeichnet, dass** sich der Abstreifer (13) am Ende der Nachprägung zusammen mit dem Trägerelement (7) nach unten bewegt.

12. Vorrichtung nach einem der Ansprüche 4 bis 11, **dadurch gekennzeichnet, dass** das an der Begrenzungshülse (9) aussenseitig vorgesehene Element radial vorstehend ausgebildet ist.

13. Vorrichtung nach Anspruch 12, **dadurch gekennzeichnet, dass** ein Mitnehmer (15), welcher an dem radial vorstehenden Element der Begrenzungshülse (9) angreift, in einer Gabelhalterung (16) eines zweiarmigen Hebels (17) gehalten ist.

14. Vorrichtung nach einem der Ansprüche 4 bis 13, **dadurch gekennzeichnet, dass** der Hebel sich um eine horizontale Lagerachse (18) dreht.

15. Vorrichtung nach einem der Ansprüche 4 bis 14, **dadurch gekennzeichnet, dass** ein der Gabelhalterung (16) gegenüberliegendes Ende des Hebels (17) auf eine Übertragungsstange (20) drückt.

16. Vorrichtung nach Anspruch 15, **dadurch gekennzeichnet, dass** die Übertragungsstange (20) vertikal verschiebbar im Drehturmaufbau (19) gelagert ist.

17. Vorrichtung nach einem der Ansprüche 15 bis 16, **dadurch gekennzeichnet, dass** an einem oberen Ende der Übertragungsstange (20) eine Rollenführung (21) angebracht ist.

18. Vorrichtung nach einem der Ansprüche 4 bis 17, **dadurch gekennzeichnet, dass** die Rollenführung (21) auf einem Kurvensegment (22) abrollt.

## Claims

1. Method for manufacturing a closure cap, wherein
a) a measure (12) of sealing material is deposited on the base (1.1) of the closure cap (1) and
b) the sealing material is spread flat with a stamping die (8) having a limiting sleeve (9) in an initial stamping operation,
**characterised in that**
c) the limiting sleeve (9) is retracted in a cam-controlled manner in a subsequent stamping operation in order to impel the sealing material as far as the casing (1.2).

2. Method according to claim 1, **characterised in that** the measure (12) is deposited in the centre of the closure cap (1) and has a height (H) which is preferably approximately equal to or less than a transverse dimension (D).

3. Method according to either claim 1 or claim 2, **characterised in that** control of the height and border of the edge (2.3) of the sealing inlay (2) is effected by means of a subsequent stamping operation.

4. Apparatus for carrying out the method according to any one of claims 1 to 3, having
a) a stamping die (8),
b) a limiting sleeve (9) which surrounds the stamping die (8) and which can be inserted into the cap (1) and
c) a carrier element (7) for the closure cap (1),
**characterised in that**
d) the limiting sleeve (9) is held in a protruding position relative to a stamping face (8.1) of the stamping die (8), and **in that** the limiting sleeve (9) can be retracted by a cam-controlled mechanism, which can be raised in a controlled manner, in order to allow the stamping of the sealing material as far as the casing (1.2).

5. Apparatus according to claim 4, **characterised in that** the stamping die (8) is mounted non-displaceably on a revolving turret, and **in that** the carrier element (7) is moved, preferably in a cam-controlled manner, towards the stamping die (8) during the initial stamping and subsequent stamping operations.

6. Apparatus according to either claim 4 or claim 5, **characterised in that** the mechanism has a lever mechanism which can engage on an element, which is provided on the outside of the limiting sleeve (9), in order to raise the limiting sleeve (9).

7. Apparatus according to any one of claims 4 to 6, **characterised in that** the limiting sleeve (9) is arranged in a coaxially displaceable manner on one side of the casing of the stamping die (8).

8. Apparatus according to any one of claims 4 to 7, **characterised in that** a spring (10) surrounds an upper portion of the stamping die (8) and presses the limiting sleeve (9) downwards.

9. Apparatus according to any one of claims 4 to 8, **characterised in that** the limiting sleeve (9) rests with a stop (9.3) on a shoulder (8.2) at an outer side of the stamping die (8).

10. Apparatus according to any one of claims 4 to 9, **characterised in that** a wiper (13) can be moved by means of a guide bar (14).

11. Apparatus according to claim 10, **characterised in that** the wiper (13) moves downwards together with the carrier element (7) at the end of the subsequent stamping operation.

12. Apparatus according to any one of claims 4 to 11, **characterised in that** the element provided externally on the limiting sleeve (9) is arranged in a radially projecting manner.

13. Apparatus according to claim 12, **characterised in that** a carrier (15), which engages on the radially projecting element of the limiting sleeve (9), is held in a forked holder (16) of a two-armed lever (17).

14. Apparatus according to any one of claims 4 to 13, **characterised in that** the lever pivots about a horizontal bearing axis (18).

15. Apparatus according to any one of claims 4 to 14, **characterised in that** one end of the lever (17) that is opposite the forked holder (16) presses on a transmission rod (20).

16. Apparatus according to claim 15, **characterised in that** the transmission rod (20) is arranged in the revolving turret structure (19) in a vertically displaceable manner.

17. Apparatus according to either claim 15 or claim 16, **characterised in that** a roller guide (21) is fitted to an upper end of the transmission rod (20).

18. Apparatus according to any one of claims 4 to 17, **characterised in that** the roller guide (21) rolls along a cam segment (22).

## Revendications

1. Procédé de fabrication d'une capsule de fermeture, dans lequel
a) un tronçon (12) de matériau d'étanchement est déposé sur le fond (1.1) de la capsule de fermeture (1),
b) le matériau d'étanchement est réparti superficiellement, dans le cadre d'un matriçage préalable, à l'aide d'un poinçon de matriçage (8) muni d'une douille de délimitation (9),
**caractérisé par le fait que**
c) la douille de délimitation (9) est rétractée en étant commandée par came, dans le cadre d'un post-matriçage, de manière à entraîner ensuite le matériau d'étanchement jusqu'à l'enveloppe (1.2).

2. Procédé selon la revendication 1, **caractérisé par le fait que** le tronçon (12) est déposé au centre de la capsule de fermeture (1), et présente une hauteur (H) de préférence sensiblement égale ou inférieure à une cote transversale (D).

3. Procédé selon l'une des revendications 1 à 2, **caractérisé par le fait qu'**une commande de la hauteur et de l'arête du bord (2.3) de la garniture intérieure d'étanchement (2) a lieu par l'intermédiaire d'un post-matriçage.

4. Dispositif pour la mise en oeuvre du procédé selon l'une des revendications 1 à 3, comprenant
a) un poinçon de matriçage (8),
b) une douille de délimitation (9) qui ceinture le poinçon de matriçage (8) et peut être introduite dans la capsule (1), et
c) un élément de support (7) affecté à la capsule de fermeture (1)
**caractérisé par le fait que**
d) la douille de délimitation (9) est retenue dans une position faisant saillie vis-à-vis d'une surface de matriçage (8.1) du poinçon de matriçage (8) ; et **par le fait qu'**elle peut être rétractée par un mécanisme commandé par came et pouvant être soulevé de manière contrôlée, afin de permettre le matriçage du matériau d'étanchement jusqu'à l'enveloppe (1.2).

5. Dispositif selon la revendication 4, **caractérisé par le fait que** le poinçon de matriçage (8) est monté avec immobilisation sur un portique tournant ; et **par le fait que** l'élément de support (7) est mis en mouvement vers le poinçon de matriçage (8), lors du matriçage préalable et du post-matriçage, en étant de préférence commandé par came.

6. Dispositif selon l'une des revendications 4 à 5, **caractérisé par le fait que** le mécanisme est équipé d'un mécanisme à levier pouvant venir en prise avec un élément prévu à l'extérieur de la douille de délimitation (9), afin de soulever ladite douille de délimitation (9).

7. Dispositif selon l'une des revendications 4 à 6, **caractérisé par le fait que** la douille de délimitation (9) est montée à coulissement coaxial sur une face de l'enveloppe du poinçon de matriçage (8).

8. Dispositif selon l'une des revendications 4 à 7, **caractérisé par le fait qu'**un ressort (10) ceinture une partie supérieure du poinçon de matriçage (8), et pousse la douille de délimitation (9) vers le bas.

9. Dispositif selon l'une des revendications 4 à 8, **caractérisé par le fait que** la douille de délimitation (9) repose, par une butée (9.3), sur un épaulement (8.2) situé sur une face extérieure du poinçon de matriçage (8).

10. Dispositif selon l'une des revendications 4 à 9, **caractérisé par le fait qu'**un racleur (13) peut être mis en mouvement par l'intermédiaire d'une tige de guidage (14).

11. Dispositif selon la revendication 10, **caractérisé par le fait que** le racleur (13) se meut vers le bas conjointement à l'élément de support (7) à la fin du post-matriçage.

12. Dispositif selon l'une des revendications 4 à 11, **caractérisé par le fait que** l'élément, prévu à l'extérieur de la douille de délimitation (9), est de réalisation saillante dans le sens radial.

13. Dispositif selon la revendication 12, **caractérisé par le fait qu'**un organe d'entraînement (15), venant en prise avec l'élément saillant radialement sur la douille de délimitation (9), est retenu dans un système de retenue fourchu (16) d'un levier (17) à deux bras.

14. Dispositif selon l'une des revendications 4 à 13, **caractérisé par le fait que** le levier tourne autour d'un axe horizontal de portée (18).

15. Dispositif selon l'une des revendications 4 à 14, **caractérisé par le fait qu'**une extrémité du levier (17), tournée à l'opposé du système de retenue fourchu (16), exerce une pression sur une tige de transmission (20).

16. Dispositif selon la revendication 15, **caractérisé par le fait que** la tige de transmission (20) est montée à coulissement vertical dans la structure (19) du portique tournant.

17. Dispositif selon l'une des revendications 15 à 16, **caractérisé par le fait qu'**un guidage par rouleau (21) est installé à une extrémité supérieure de la tige de transmission (20).

18. Dispositif selon l'une des revendications 4 à 17, **caractérisé par le fait que** le guidage par rouleau (21) roule sur un segment de came (22).
